# EUROPÄISCHE PATENTSCHRIFT

(11) **EP 1 567 768 B1**
(45) Veröffentlichungstag und Bekanntmachung des Hinweises auf die Patenterteilung: **21.04.2010**
(21) Anmeldenummer: 03779928.5
(22) Anmeldetag: 14.11.2003
(51) Int. Cl.: F03B 17/06

(54) **UNTERWASSER ANGEORDNETE LAUFKRAFTTURBINE**
SUBMERGED RUN OF RIVER TURBINE
TURBINE AU FIL DE L'EAU IMMERGEE

(30) Priorität: 05.12.2002 DE 10256864
(43) Veröffentlichungstag der Anmeldung: 31.08.2005
(73) Patentinhaber: Stein HT GmbH Spezialtiefbau, 44653 Herne (DE)
(72) Erfinder: Buttler, Ernst, 48157 Münster (DE)
(74) Vertreter: Nunnenkamp, Jörg
(86) Internationale Anmeldenummer: PCT/EP2003/012731
(87) Internationale Veröffentlichungsnummer: WO 2004/051079

(56) Entgegenhaltungen:
- WO-A-02/064974
- WO-A-03/046375
- DE-C- 647 287
- GB-A- 200 027
- US-A- 4 095 918
- US-A- 4 868 408

## Beschreibung

Die Erfindung betrifft eine Wasserkraftanlage zum Erzeugen von elektrischer Energie unter Umwandlung von Strömungsenergie eines strömenden Gewässers, mittels einer Strömungsmaschine mit zumindest einem Rotor, einem von dem Rotor angetriebenen Generator und einem Schwimmkörper für die Strömungsmaschine, wobei die Strömungsmaschine ortsfest verankert und der Rotor in Strömungsrichtung des Gewässers ausgerichtet ist, wobei ferner die Strömungsmaschine unterhalb der Gewässeroberfläche im Schwebezustand gehalten und dazu der Schwimmkörper wahlweise mit einem gasförmigen Medium, z.B. Druckluft, beaufschlagbar und mit Wasser flutbar ist, und wobei der Rotor auf einer in Strömungsrichtung des Gewässers ausgerichteten Rotorachse gelagert ist. - Im Rahmen der Erfindung meint Rotor Schaufel- und Flügelräder sowie Propeller, Mehrflügler oder dergleichen. Als strömende Gewässer sind insbesondere Meeresströmungen und Flüsse verfügbar.

Anders als Windkraftanlagen, welche die Strömungsenergie des Windes in elektrische Energie umwandeln und bei Windstille Stillstandzeiten in Kauf nehmen müssen, können Wasserkraftanlagen ununterbrochen elektrische Energie erzeugen, weil sich strömende Gewässer in ständiger Bewegung befinden. Es sind Wasserkraftanlagen der eingangs beschriebenen Ausführungsform bekannt, die eine an der Wasseroberfläche schwimmende Strömungsmaschine aufweisen. Das ist einerseits in ästhetischer Hinsicht unbefriedigend, weil das Landschaftsbild gestört wird, andererseits muss eine reduzierte Energieumwandlung in Kauf genommen werden, weil der Rotor in der Ausführungsform als regelmäßig Schaufelrad nur teilweise in das strömende Gewässer eintaucht und angetrieben wird (vgl. DE 41 12 730 C2).

Man kennt allerdings auch Strömungsmaschinen zum Einsatz in Unterwasserkraftwerken, bei denen Schaufelräder auf einem Gerüst angeordnet sind und das Gerüst auf einem Fundament im Gewässerboden aufgestellt ist. Bei derartigen Ausführungsformen ist das Niederbringen des Fundamentes aufwändig und eine hinreichende Verankerung des Gerüstes auf dem Fundament kaum gewährleistet, sodass eine hinreichende Ausrichtung der Schaufelräder in Strömungsrichtung kaum gewährleistet ist (vgl. DE 200 11 874 U1).

Bei einer anderen Unterwasser-Strömungsmaschine zur Energiegewinnung ist die Laufachse des Rotors am unteren Ende mit einem Zapfen in einem Lager drehbar gelagert. Dieses Lager befindet sich in einem mehrteiligen Fundament, dessen einzelne Fundamentteile zum Einsatzort geschwommen und dort mit Taucherhilfe am Gewässerboden zusammengebaut werden müssen (vgl. DE 299 00 124 U1).

Im nächstkommenden Stand der Technik nach der US 4 868 408 sorgen relativ ausladende und speziell vorgesehene Kammern dafür, dass der Schwebezustand erreicht und beibehalten wird. Daraus resultiert ein nicht unerhebliches Volumen der bekannten Wasserkraftanlage.

Der Erfindung liegt das technische Problem zugrunde, eine derartige Wasserkraftanlage so weiterzuentwickeln, dass die Strömungsmaschine im Einsatz nicht sichtbar ist, eine kurzfristige Installation ermöglicht und sich darüber hinaus durch eine bei optimierten Strömungsverhältnissen in montagetechnischer und wartungstechnischer Hinsicht einfache Bauweise auszeichnet.

Diese Aufgabe löst die Erfindung bei einer gattungsgemäßen Wasserkraftanlage dadurch, dass die Rotorblätter des Rotors mittels eines Verstellmechanismus in oder gegen die Strömungsrichtung verstellbar sind und die Rotorachse als Hohlachse ausgebildet ist sowie den Schwimmkörper bildet. Diese Maßnahmen der Erfindung haben zunächst einmal zur Folge, dass die Strömungsmaschine im Einsatz nicht sichtbar ist und folglich in ästhetischer Hinsicht allen Anforderungen genügt, weil das Landschaftsbild erhalten bleibt. Darüber hinaus ist gewährleistet, dass sich der Rotor stets über seinen gesamten Umfang in strömendem Gewässer befindet und folglich eine optimale Umwandlung von Strömungsenergie in elektrische Energie erreicht wird. Ferner lässt sich eine in konstruktiver Hinsicht verhältnismäßig einfache Bauweise verwirklichen, die einen kurzfristigen Einsatz und eine einfache Montage gewährleistet. Auch Wartungs- und Reparaturarbeiten lassen sich unschwer durchführen, weil die Strömungsmaschine durch Beaufschlagung mit einem gasförmigen Medium wie z. B. Druckluftbeaufschlagung des Schwimmkörpers an die Gewässeroberfläche gehoben werden kann. Tatsächlich lässt sich der Hebe- und Senkvorgang der Strömungsmaschine über eine Druckluftleitung durch Luftzufuhr steuern, gegebenenfalls auch im Wege des Flutens. Auch ein Absenken der Strömungsmaschine auf den Grund des Gewässers ist möglich.

Dadurch, dass sich die Rotorblätter mittels des Verstellmechanismus in oder gegen die Strömungsrichtung verstellen lassen, kann beispielsweise eine Leistungsminderung bei einem ein vorgegebenes Maß übersteigenden Strömungsdruck verhindert werden. Das gelingt durch gleichsam eine Fahnenstellung der Rotorblätter und folglich Reduzierung der Anströmflächen. Die den Schwimmkörper bildende Hohlachse zeichnet sich durch hohe Biegesteifigkeit aus und unterstützt die Ausrichtung des Rotors in Strömungsrichtung des fließenden Gewässers.

Erfindungsgemäß sind die Rotorblätter des auf der Rotorachse drehfest gelagerten Rotors in Strömungsrichtung abschwenkbar und mittels Federbeaufschlagung gegen den Strömungsdruck aufrecht gehalten und werden bei Überschreiten des Strömungsdruckes um ein vorgegebenes Maß sukzessive in Strömungsrichtung unter Verkleinerung der Anströmfläche abgeschwenkt. Insoweit wird ein verhältnismäßig einfacher und funktionsgerechter Verstellmechanismus für die Rotorblätter erreicht. Das gilt insbesondere dann, wenn die Rotorblätter auf ihrer strömungsabgewandten Seite mittels Stütznasen gegen aufgespreizte Blattfedern abgestützt sind, die über den Umfang der Rotorachse verteilt und auf der Rotorachse befestigt sind. Die Federkraft dieser Blattfedern definiert jenen Strömungsdruck, bei dem die Rotorblätter aufrecht gehalten werden. Erst wenn der Strömungsdruck die Federkraft der Blattfedern überschreitet, werden die Rotorblätter in gleichsam Fahnenstellung abgeschwenkt.

Nach einer anderen Ausführungsform der Erfindung ist auf der Rotorachse ein Widerlager angeordnet, wobei an den Rotorblättern Lenkhebel angelenkt sind und die Lenkhebel an einem auf der Rotorachse in Achslängsrichtung verschiebbaren Lagerring angelenkt sind und wobei ferner zwischen dem Widerlager und dem Lagerring eine die Rotorachse umgebende Druckfeder in der Ausführungsform einer wendelförmigen Feder angeordnet ist, welche die Rotorblätter über die Lenkhebel und gegen die Strömungsrichtung des Gewässers beaufschlagt. In diesem Fall werden die Rotorblätter abgeschwenkt, wenn der wirksame Strömungsdruck die Federkraft der Druckfeder übersteigt. Die Rotorachse kann als zumindest am vorderen und hinteren Achsende Spindelachse ausgebildet sein, wobei das Widerlager und/oder das Lager für die Rotorblätter als auf der Spindelachse verstellbare und arretierbare Spindelmuttern ausgebildet sind, um die Druckfeder um ein vorgegebenes Maß vorspannen bzw. den Federdruck variieren zu können. Nach einer abgewandelten Ausführungsform der Erfindung ist zwischen dem Lagerring und dem Lager für die Rotorblätter eine die Spindelachse umgebende schraubenwendelförmige Druckfeder oder Zugfeder angeordnet, wobei der Lagerring sowie das Lager für die Rotorblätter als Spindelmuttern ausgebildet sind. In diesem Fall hängt es von der Strömungsrichtung und folglich Beaufschlagung der Rotorblätter aus der einen oder anderen Richtung ab, ob die zwischen dem Lagerring und dem Lager für die Rotorblätter angeordnete Feder als Druckfeder oder Zugfeder arbeitet.

Weiter lehrt die Erfindung, dass auf der Rotorachse eine Mehrzahl von Rotoren mit jeweils Verstellmechanismus in vorgegebenen Abständen angeordnet ist. Bei dieser Ausführungsform wird der Strömungsdruck aus dem fließenden Gewässer auf eine Mehrzahl von Rotorblättern verteilt, sodass selbst geringe Fließgeschwindigkeiten eine hinreichende Energieumwandlung ermöglichen. Zugleich wird eine Reduzierung des Strömungsdruckes durch seine Verteilung auf die einzelnen Rotorblätter erreicht. Das gilt insbesondere dann, wenn die Außendurchmesser der Rotoren bzw. ihrer Rotorblätter in Strömungsrichtung des Gewässers um eine vorgegebene Abstufung zunehmen und die vorgeordneten Rotoren übersteigen.

Vorzugsweise ist die Rotorachse als sich in Strömungsrichtung des Gewässers konisch erweiternde Hohlachse ausgebildet und zeichnet sich dadurch nicht nur durch eine strömungsgünstige Konstruktion aus, sondern reduziert zugleich auch die am angeflanschten Generator angreifenden Beanspruchungen und insbesondere Biegekräfte. Die Hohlachse ist zweckmäßigerweise aus Hohlkammern bildenden Achsabschnitten mit jeweils einem Rotor aufgebaut und verlängerbar, wobei die Achsabschnitte mittels gasdichter bzw. luftdichter und wasserdichter Flanschverbindungen aneinander anschließbar sind. Dadurch lässt sich die Rotorachse mit hinreichender Stabilität und Schwimmfähigkeit wahlweise verlängern. In diesem Zusammenhang besteht auch die Möglichkeit, die Rotorachse in vorgegebenen Abständen mittels Führungslager abzustützen. Ferner kann das in Strömungsrichtung hintere Ende der Rotorachse ein Leitwerk aufweisen, sodass einwandfreie Ausrichtung der Rotorachse und der darauf befindlichen Rotoren gewährleistet ist.

Der Generator kann in einem wasserdichten Gehäuse, z. B. Gehäuse aus Halbschalen wie Rohrhälften mit außenseitigen Kühlrippen angeordnet sein, welche vorzugsweise in Gehäuselängsrichtung und folglich Strömungsrichtung verlaufen. Es besteht ferner die Möglichkeit, dass mehrere Generatoren in Reihe hintereinander angeordnet und aneinander sowie an die Rotorachse angeschlossen sind, um eine optimale Energieumwandlung in elektrischen Strom zu erzielen. Aus strömungstechnischen Gründen kann an das Gehäuse anströmseitig ein hohler Strömungskegel angeflanscht sein, der überdies auch im Generatorbereich für Auftrieb sorgt. Denn der Schwimmkörper ist vorzugsweise von der Hohlachse, gegebenenfalls dem Gehäuse und dem Strömungskegel gebildet. Nach einer anderen Ausführungsform der Erfindung ist der Schwimmkörper von einem Rahmengestell mit Hohlträgern und/oder Kästen für eine oder mehrere Strömungsmaschinen gebildet. Außerdem können an den flutbaren Schwimmkörper eine oder mehrere Gas- oder Druckluftleitungen angeschlossen sein. Endlich sieht die Erfindung vor, dass mehrere Strömungsmaschinen in Reihe nebeneinander und/oder in versetzter Anordnung hintereinander angeordnet und gegebenenfalls mittels flexibler oder elastischer Verbindungsmittel aneinander angeschlossen sind, um gleichsam ein Kraftwerk zu verwirklichen. Die Strömungsmaschine bzw. -maschinen sind mittels Ketten, Trosse oder dergleichen am Ufer oder Grund des Gewässers verankert, sodass im letzteren Fall auch die Verankerung unsichtbar bleibt.

Im Folgenden wird die Erfindung anhand einer lediglich ein Ausführungsbeispiel darstellenden Zeichnung näher erläutert. Es zeigen:

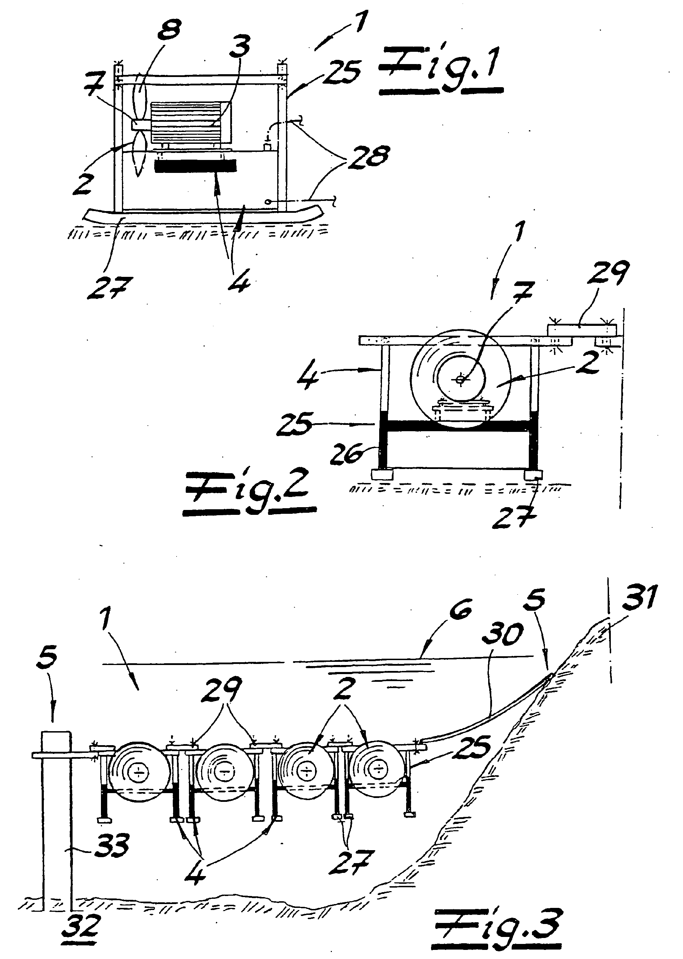

- Fig.1: eine Strömungsmaschine nach dem Stand der Technik in schematischer Seitenansicht zur allgemeinen Erläuterung,
- Fig. 2: den Gegenstand nach Fig. 1 in Frontansicht,
- Fig.3: eine Wasserkraftanlage mit mehreren in Reihe nebeneinander angeordneten Strömungsmaschinen in Frontansicht,

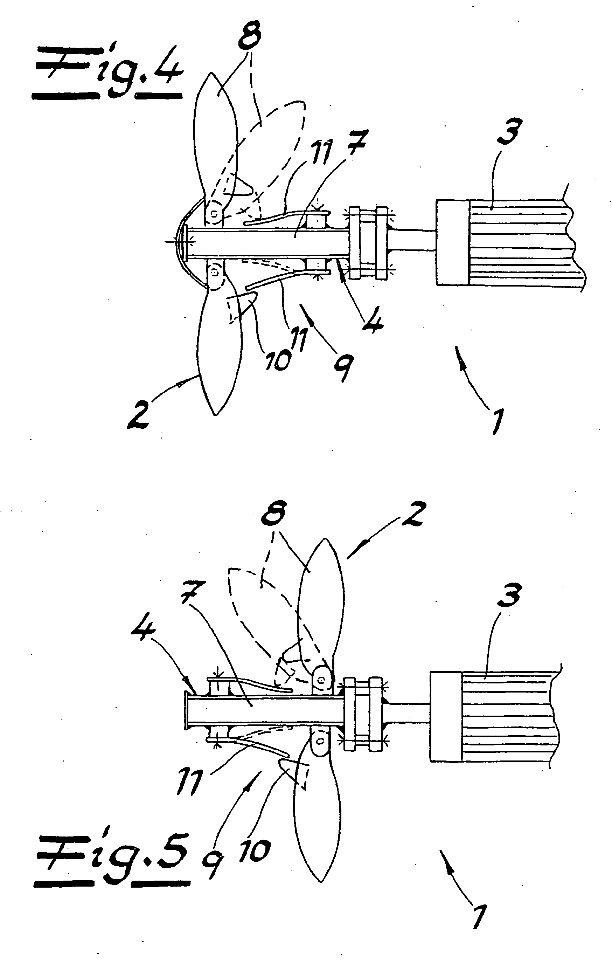

- Fig.4: einen Ausschnitt aus dem Gegenstand nach Fig. 1 mit in Generatorrichtung abschwenkbaren Rotorblättern,
- Fig. 5: den Gegenstand nach Fig. 4 mit in entgegengesetzter Richtung abschwenkbaren Rotorblättern,

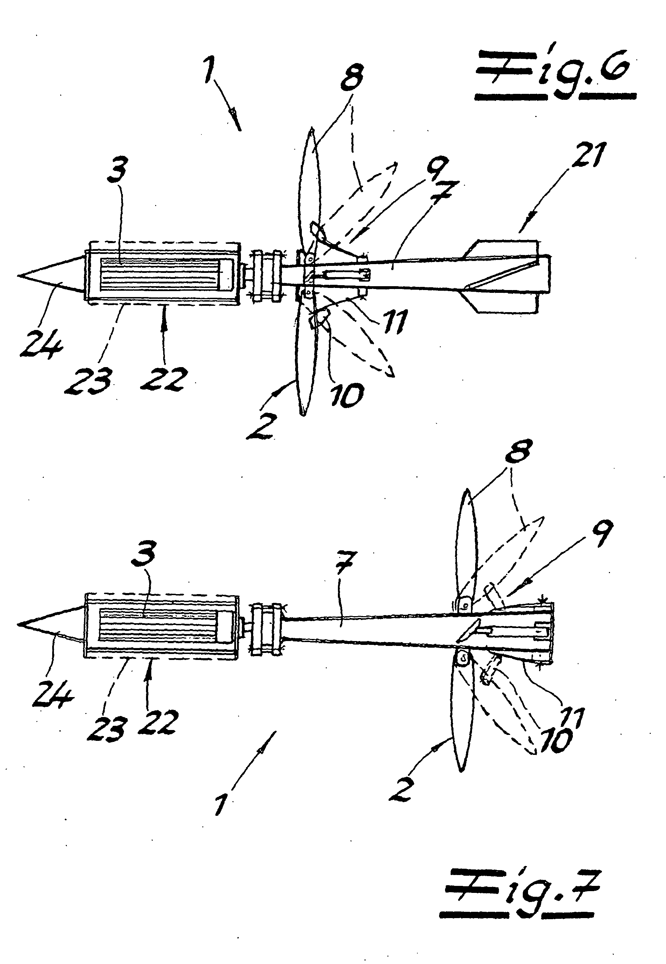

- Fig. 6: eine abgewandelte Ausführungsform des Gegenstandes nach Fig. 1 mit einem in einem Gehäuse untergebrachten Generator,
- Fig. 7: eine abgewandelte Ausführungsform des Gegenstandes nach Fig. 6,

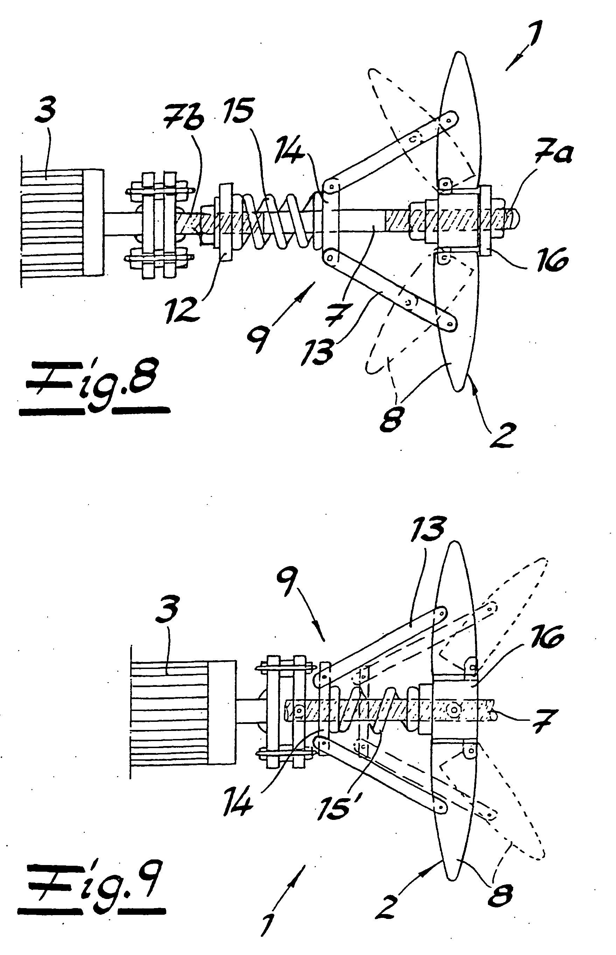

- Fig. 8: eine weiter abgewandelte Ausführungsform des Gegenstandes nach Fig. 1,
- Fig. 9: eine abgewandelte Ausführungsform des Gegenstandes nach Fig. 8,

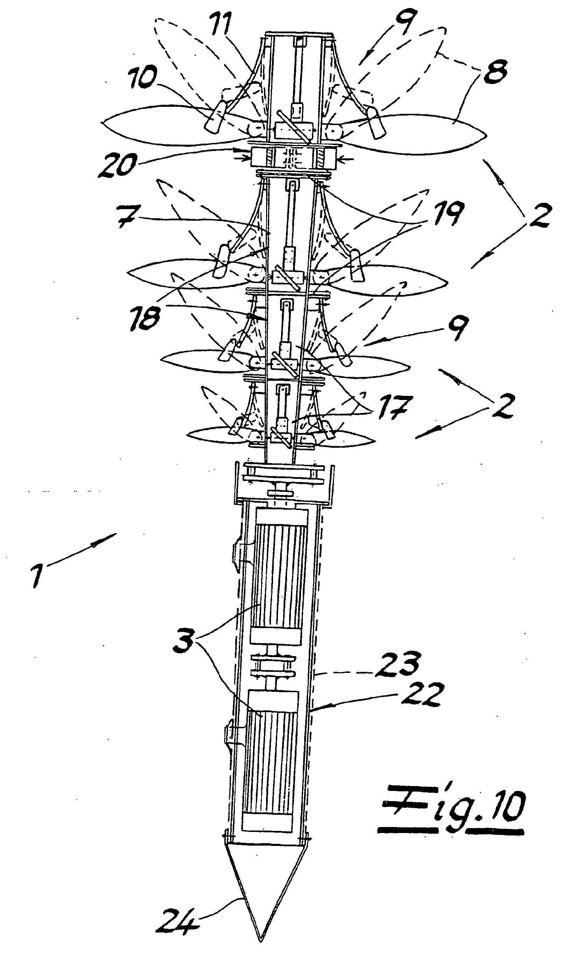

- Fig. 10: eine erfindungsgemäße Ausführungsform in einer Abwandlung des Gegenstandes nach Fig. 7 und

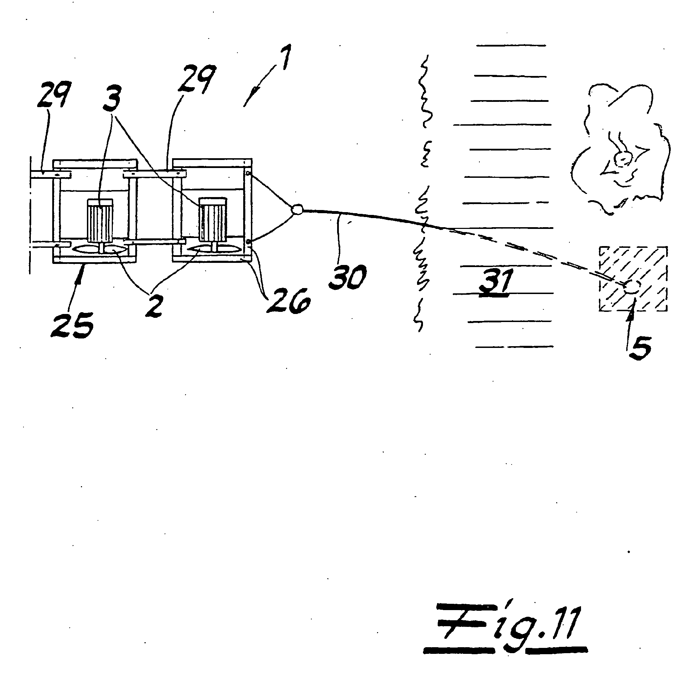

- Fig. 11: ausschnittsweise eine Draufsicht auf den Gegenstand nach Fig. 3.

In den Figuren ist eine Wasserkraftanlage zum Erzeugen von elektrischer Energie bzw. elektrischem Strom unter Umwandlung von Strömungsenergie eines strömenden Gewässers dargestellt. Diese Wasserkraftanlage weist zumindest eine Strömungsmaschine 1 mit zumindest einem Rotor 2, einen von dem Rotor 2 angetriebenen Generator 3 und einen Schwimmkörper 4 für die Strömungsmaschine 1 auf, wobei die Strömungsmaschine 1 ortsfest, z. B. an uferseitigen und/oder wassergrundseitigen Festpunkten 5 derart verankert ist, dass der Rotor 2 in Strömungsrichtung des Gewässers ausgerichtet ist. Die Strömungsmaschine 1 ist unterhalb der Gewässeroberfläche 6 in einem Schwebezustand gehalten. Dazu ist der Schwimmkörper 4 wahlweise mit Druckluft oder einem anderen gasförmigen Medium beaufschlagbar und gegebenenfalls mit Wasser flutbar. Die dazu erforderlichen Ventil- und Steuereinrichtungen sind nicht dargestellt.

Der Rotor 2 ist auf einer in Strömungsrichtung des Gewässers ausgerichteten Rotorachse 7 gelagert. Seine Rotorblätter 8 sind mittels eines Verstellmechanismus 9 in oder gegen die Strömungsrichtung verstellbar. Außerdem können die Rotorblätter 8 zur Veränderung ihres Anstellwinkels um ihre Längsachse verstellbar sein. Bei der überwiegenden Anzahl der Ausführungsformen ist die jeweilige Rotorachse 7 als Hohlachse ausgeführt, die zugleich den Schwimmkörper 4 bildet. Sofern die Rotorachse 7 nicht als Hohlachse ausgestaltet ist, handelt es sich um Abbildungen, die nicht erfindungsgemäß gestaltet sind, gleichwohl aber dem besseren Verständnis dienen.

Die Rotorblätter 8 des auf der Rotorachse 7 drehfest gelagerten Rotors 2 sind in Strömungsrichtung abschwenkbar und mittels Federbeaufschlagung gegen den Strömungsdruck aufrecht gehalten. Bei Überschreiten des Strömungsdruckes um ein vorgegebenes Maß werden die Rotorblätter 8 sukzessive in Strömungsrichtung unter Verkleinerung der Anströmfläche in gleichsam Fahnenstellung abgeschwenkt. Das ist gestrichelt angedeutet. Im Einzelnen sind die Rotorblätter 8 auf ihrer strömungsabgewandten Seite mittels Stütznasen 10 gegen aufgespreizte Blattfedern 11 abgestützt, die über den Umfang der Rotorachse 7 verteilt und auf der Rotorachse 7 befestigt sind.
Bei einer anderen Ausführungsform ist auf der Rotorachse 7 ein Widerlager 12 angeordnet. Ferner sind an den Rotorblättern 8 Lenkhebel 13 angelenkt, die ebenfalls an einem auf der Rotorachse 7 in Achslängsrichtung verschiebbaren Lagerring 14 angelenkt sind. Zwischen dem Widerlager 12 und dem Lagerring 14 ist eine die Rotorachse 7 umgebende Druckfeder 15 angeordnet, welche die Rotorblätter 8 über die Lenkhebel 13 gegen die Strömungsrichtung des Gewässers beaufschlagt. Die Rotorachse 7 kann zumindest am vorderen und hinteren Achsende als Spindelachse 7a, 7b ausgebildet sein, wobei das Widerlager 12 und/oder das Lager 16 für die Rotorblätter 8 als auf der Spindelachse 7a, 7b verstellbare und arretierbare Spindelmuttern ausgebildet sind. - Bei einer abgewandelten Ausführungsform ist zwischen dem Lagerring 14 und dem Lager 16 für die Rotorblätter 8 eine die Spindelachse 7 umgebende schraubenwendelförmige Druckfeder 15' angeordnet, die in Abhängigkeit von der Strömungsrichtung auch als Zugfeder arbeiten kann. Der Lagerring 14 sowie das Lager 16 für die Rotorblätter 8 sind als Spindelmuttern ausgebildet.

Auf der Rotorachse 7 kann eine Mehrzahl von Rotoren 2 mit jeweils Verstellmechanismus 9 in vorgegebenen Abständen angeordnet sein. In diesem Fall nehmen die Außendurchmesser der Rotoren 2 bzw. ihrer Rotorblätter 8 in Strömungsrichtung des Gewässers um eine vorgegebene Abstufung zu und übersteigen die vorgeordneten Rotoren, wodurch gleichsam ein angedeuteter Strömungskegel gebildet wird. Bei dieser Ausführungsform empfiehlt sich eine Ausbildung der Rotorachse 7 als sich in Strömungsrichtung des Gewässers konisch erweiternde Hohlachse, die mit ihrem verjüngten Ende an einen Generator 3 angeschlossen ist. Die Hohlachse kann aus Hohlkammern 17 bildenden Achsabschnitten 18 mit jeweils einem Rotor 2 und Verstellmechanismus 9 aufgebaut sein und folglich um eine Mehrzahl von Achsabschnitten 18 verlängerbar sein. Dazu sind die Achsabschnitte 18 mittels gas- bzw. luftdichter und wasserdichter Flanschverbindungen 19 aneinander anschließbar. Im Übrigen besteht die Möglichkeit, die Rotorachse 7 in vorgegebenen Abständen mittels Führungslager 20 abzustützen. - Bei einer Ausführungsform weist das in Strömungsrichtung hintere Ende der Rotorachse 7 ein Leitwerk 21 auf, wodurch die Ausrichtung der Strömungsmaschine 1 in Strömungsrichtung stabilisiert wird.

Der Generator 3 kann in einem Gehäuse 22, z. B. aus Halbschalen bestehenden Gehäuse mit außenseitigen Kühlrippen 23 angeordnet sein. Es besteht auch die Möglichkeit, mehrere Generatoren 3 in Reihe hintereinander anzuordnen und aneinander sowie an die Rotorachse 7 anzuschließen. Auch in diesem Fall können die Generatoren 3 eingehaust sein. Vorzugsweise ist anströmseitig an das Gehäuse 22 ein hohler Strömungskegel 24 angeflanscht.

Bei einer Ausführungsform ist der Schwimmkörper 4 von der Hohlachse 7, gegebenenfalls dem Gehäuse 22 und dem Strömungskegel 24 gebildet. Bei einer anderen Ausführungsform ist der Schwimmkörper 4 von einem Rahmengestell 25 mit Hohlträgern 26 und/oder Kästen für eine oder mehrere Strömungsmaschinen 1 gebildet. Dieses Rahmengestell 25 kann zum Aufsetzen mit Kufen 27 bestückt sein.

An den flutbaren Schwimmkörper 4 sind eine oder mehrere Druckluftleitungen 28 angeschlossen. Zur Verwirklichung eines Wasserkraftwerkes können mehrere Strömungsmaschinen 1 in Reihe nebeneinander und/oder in versetzter Anordnung hintereinander angeordnet und gegebenenfalls mittels flexibler oder biegeelastischer Verbindungsmittel 29 aneinander angeschlossen sein. - Die Strömungsmaschine oder -maschinen 1 sind mittels Ketten, Trosse 30 oder dergleichen am Ufer 31 und/oder Grund 32 des Gewässers in Festpunkten 5 verankert. Bei einer Verankerung am Grund 32 des Gewässers kann man unter Verzicht auf ein aufwendiges Fundament einen Schlag- oder Bohrpfahl 33 einbringen.

## Patentansprüche

1. Wasserkraftanlage zum Erzeugen von elektrischer Energie unter Umwandlung von Strömungsenergie eines strömenden Gewässers, mittels einer Strömungsmaschine (1) mit zumindest
- einem Rotor (2),
- einem von dem Rotor (2) angetriebenen Generator (3) und
- einem Schwimmkörper (4) für die Strömungsmaschine (1),
wobei
a) die Strömungsmaschine (1) ortsfest verankert und der Rotor (2) in Strömungsrichtung des Gewässers ausgerichtet ist,
b) die Strömungsmaschine (1) unterhalb der Gewässeroberfläche im Schwebezustand gehalten ist,
c) dazu der Schwimmkörper (4) wahlweise mit einem gasförmigen Medium beaufschlagbar und mit Wasser flutbar ist,
d) der Rotor (2) auf einer in Strömungsrichtung des Gewässers ausgerichteten Rotorachse (7) gelagert ist,
**dadurch gekennzeichnet, dass**
e) die Rotorblätter (8) des Rotors (2) mittels eines Verstellmechanismus (9) in oder gegen die Strömungsrichtung verstellbar sind und
f) die Rotorachse (7) als Hohlachse ausgebildet ist und den Schwimmkörper (4) bildet.

2. Wasserkraftanlage nach Anspruch 1, **dadurch gekennzeichnet, dass** die Rotorblätter (8) des auf der Rotorachse (7) drehfest gelagerten Rotors (2) in Strömungsrichtung abschwenkbar sind und mittels Federbeaufschlagung gegen den Strömungsdruck aufrecht gehalten sind und bei Überschreiten des Strömungsdruckes um ein vorgegebenes Maß sukzessive in Strömungsrichtung unter Verkleinerung der Anströmfläche abgeschwenkt werden.

3. Wasserkraftanlage nach Anspruch 1 oder 2, **dadurch gekennzeichnet, dass** die Rotorblätter (8) auf ihrer strömungsabgewandten Seite mittels Stütznasen (10) gegen aufgespreizte Blattfedern (11) abgestützt sind, die über den Umfang der Rotorachse (7) verteilt und auf der Rotorachse (7) befestigt sind.

4. Wasserkraftanlage nach einem der Ansprüche 1 bis 3, **dadurch gekennzeichnet, dass** auf der Rotorachse (7) ein Widerlager (12) angeordnet ist, dass an den Rotorblättern (8) Lenkhebel (13) angelenkt sind, dass die Lenkhebel (13) an einem auf der Rotorachse (7) in Achslängsrichtung verschiebbaren Lagerring (14) angelenkt sind, und dass zwischen dem Widerlager (12) und dem Lagering (14) eine die Rotorachse (7) umgebende Druckfeder (15) angeordnet ist, welche die Rotorblätter (8) über die Lenkhebel (13) und gegen die Strömungsrichtung des Gewässers beaufschlagt.

5. Wasserkraftanlage nach einem der Ansprüche 1 bis 4, **dadurch gekennzeichnet, dass** die Rotorachse (7) zumindest am vorderen und hinteren Achsende als Spindelachse (7a, 7b) ausgebildet ist, und dass das Widerlager (12) und/oder das Lager (16) für die Rotorblätter (8) als auf der Spindelachse (7a, 7b) verstellbare und arretierbare Spindelmuttern ausgebildet sind.

6. Wasserkraftanlage nach einem der Ansprüche 1 bis 5, **dadurch gekennzeichnet, dass** zwischen dem Lagerring (14) und dem Lager (16) für die Rotorblätter (8) eine die Spindelachse (7) umgebende Druckfeder (15') oder Zugfeder angeordnet ist und der Lagerring (14) sowie das Lager (16) für die Rotorblätter (8) als Spindelmuttern ausgebildet sind.

7. Wasserkraftanlage nach einem der Ansprüche 1 bis 6, **dadurch gekennzeichnet, dass** auf der Rotorachse (7) in vorgegebenen Abständen eine Mehrzahl von Rotoren (2) mit jeweils Verstellmechanismus (9) angeordnet ist.

8. Wasserkraftanlage nach Anspruch 7, **dadurch gekennzeichnet, dass** die Außendurchmesser der Rotoren (2) bzw. ihrer Rotorblätter (8) in Strömungsrichtung des Gewässers um eine vorgegebene Abstufung zunehmen und die jeweils vorgeordneten Rotoren (2) übersteigen.

9. Wasserkraftanlage nach einem der Ansprüche 1 bis 8, **dadurch gekennzeichnet, dass** die Rotorachse (7) als sich in Strömungsrichtung des Gewässers konisch erweiternde Hohlachse ausgebildet ist.

10. Wasserkraftanlage nach einem der Ansprüche 1 bis 9, **dadurch gekennzeichnet, dass** die Hohlachse (7) aus Hohlkammern (17) bildenden Achsabschnitten (18) mit jeweils einem Rotor (2) und Verstellmechanismus (9) aufgebaut und um weitere Achsabschnitte (18) verlängerbar ist, wobei die Achsabschnitte (18) mittels gas- bzw. luftdichter und wasserdichter Flanschverbindungen (19) aneinander anschließbar sind.

11. Wasserkraftanlage nach einem der Ansprüche 1 bis 10, **dadurch gekennzeichnet, dass** die Rotorachse (7) in vorgegebenen Abständen mittels Führungslager (20) abgestützt ist.

12. Wasserkraftanlage nach einem der Ansprüche 1 bis 11, **dadurch gekennzeichnet, dass** das in Strömungsrichtung hintere Ende der Rotorachse (7) ein Leitwerk (21) aufweist.

13. Wasserkraftanlage nach einem der Ansprüche 1 bis 12, **dadurch gekennzeichnet, dass** der Generator (3) in einem Gehäuse (22), z. B. aus Halbschalen gebildeten Gehäuse mit außenseitigen Kühlrippen (23) angeordnet ist.

14. Wasserkraftanlage nach einem der Ansprüche 1 bis 13, **dadurch gekennzeichnet, dass** mehrere Generatoren (3) in Reihe hintereinander angeordnet und gekuppelt sowie an die Rotorachse (7) angeschlossen sind.

15. Wasserkraftanlage nach Anspruch 13 oder 14, **dadurch gekennzeichnet, dass** an dem Gehäuse (22) anströmseitig ein hohler Strömungskegel (24) angeflanscht ist.

## Claims

1. Hydroelectric power plant for generating electrical energy while converting flow energy of a flowing body of water by means of a flow machine (1), with at least
- a rotor (2),
- a generator (3) driven by the rotor (2) and
- a float (4) for the flow machine (1),
wherein
a) the flow machine (1) is anchored in a fixed manner and the rotor (2) is aligned in the flow direction of the body of water,
b) the flow machine (1) is held below the surface of the water in a suspended state,
c) the float (4) can to this end be optionally loaded with a gaseous medium and flooded with water,
d) the rotor (2) is mounted on a rotor axle (7) which is aligned in the flow direction of the body of water,
**characterised in that**
e) the rotor blades (8) of the rotor (2) can be adjusted in or against the flow direction by means of an adjusting mechanism (9) and
f) the rotor axle (7) is configured as a hollow axle and forms the float (4).

2. Hydroelectric power plant according to Claim 1, **characterised in that** the rotor blades (8) of the rotor (2) which is mounted in a rotationally fixed manner on the rotor axle (7) can be pivoted in the flow direction and are held upright against the flow pressure by means of spring loading and, when the flow pressure is exceeded by a predefined amount, are successively pivoted in the flow direction while reducing the inflow area.

3. Hydroelectric power plant according to Claim 1 or 2, **characterised in that** the rotor blades (8) are supported on their side facing away from the flow by means of supporting lugs (10) against outspread blade springs (11) which are distributed over the circumference of the rotor axle (7) and fastened to the rotor axle (7).

4. Hydroelectric power plant according to one of Claims 1 to 3, **characterised in that** an abutment (12) is arranged on the rotor axle (7), that steering levers (13) are articulated on the rotor blades (8), that the steering levers (13) are articulated on a bearing ring (14) which can be displaced on the rotor axle (7) in the longitudinal direction of the axle, and that a pressure spring (15), which surrounds the rotor axle (7) and loads the rotor blades (8) by means of the steering lever (13) counter to the flow direction of the water, is arranged between the abutment (12) and the bearing ring (14).

5. Hydroelectric power plant according to one of Claims 1 to 4, **characterised in that** the rotor axle (7) is configured at least at the front and rear axle ends as a spindle axle (7a, 7b), and that the abutment (12) and/or the bearing (16) for the rotor blades (8) are configured as spindle nuts which can be adjusted and locked on the spindle axle (7a, 7b).

6. Hydroelectric power plant according to one of Claims 1 to 5, **characterised in that** a pressure spring (15') or tension spring which surrounds the spindle axle (7) is arranged between the bearing ring (14) and the bearing (16) for the rotor blades (8), and the bearing ring (14) and the bearing (16) for the rotor blades (8) are configured as spindle nuts.

7. Hydroelectric power plant according to one of Claims 1 to 6, **characterised in that** a plurality of rotors (2) with an adjusting mechanism (9) each are arranged on the rotor axle (7) at predefined intervals.

8. Hydroelectric power plant according to Claim 7, **characterised in that** the external diameters of the rotors (2) and their rotor blades (8) increase by a predefined increment in the flow direction of the water and exceed the previous rotors (2) in each case.

9. Hydroelectric power plant according to one of Claims 1 to 8, **characterised in that** the rotor axle (7) is configured as a hollow axle which widens conically in the flow direction of the water.

10. Hydroelectric power plant according to one of Claims 1 to 9, **characterised in that** the hollow axle (7) is constructed of axle sections (18) which form hollow chambers (17), with in each case one rotor (2) and adjusting mechanism (9), and can be widened by further axle sections (18), wherein the axle sections (18) can be connected to each other by means of gastight or airtight and watertight flange connections (19).

11. Hydroelectric power plant according to one of Claims 1 to 10, **characterised in that** the rotor axle (7) is supported at predefined intervals by means of guide bearings (20).

12. Hydroelectric power plant according to one of Claims 1 to 11, **characterised in that** the end of the rotor axle (7) which is at the rear in the flow direction has a deflector (21).

13. Hydroelectric power plant according to one of Claims 1 to 12, **characterised in that** the generator (3) is arranged in a housing (22), for example a housing formed from half shells, with outer cooling ribs (23).

14. Hydroelectric power plant according to one of Claims 1 to 13, **characterised in that** a plurality of generators (3) are arranged and coupled in series one after the other and connected to the rotor axle (7).

15. Hydroelectric power plant according to Claim 13 or 14, **characterised in that** a hollow flow cone (24) is flange-mounted on the inflow side of the housing (22).

## Revendications

1. Installation hydraulique pour la production d'énergie électrique par conversion d'énergie d'écoulement d'un cours d'eau s'écoulant, au moyen d'une turbomachine (1) comprenant au moins
- un rotor (2),
- un générateur (3) entraîné par le rotor (2) et
- un flotteur (4) pour la turbomachine (1),
a) la turbomachine (1) étant ancrée façon fixe et le rotor (2) étant orienté dans le sens d'écoulement du cours d'eau,
b) la turbomachine (1) étant maintenue au-dessus de la surface de l'eau dans l'état flottant,
c) le flotteur (4) pouvant être alimenté à cet effet en option avec un fluide gazeux et pouvant être rempli d'eau,
d) le rotor (2) étant monté sur un axe de rotor (7) orienté dans le sens d'écoulement du cours d'eau,
**caractérisée en ce que**
e) les pales (8) du rotor (2) peuvent être déplacées au moyen d'un mécanisme de déplacement (9) dans ou contre le sens d'écoulement et
f) l'axe de rotor (7) est conçu comme axe creux et forme le flotteur (4).

2. Installation hydraulique selon la revendication 1, **caractérisée en ce que** les pales de rotor (8) du rotor (2) monté de façon solidaire en rotation sur l'axe de rotor (7) peuvent être pivotées vers le bas dans le sens d'écoulement et sont maintenues verticalement au moyen d'une sollicitation par ressort contre la pression d'écoulement et, en cas de dépassement de la pression d'écoulement, sont basculées vers le bas d'une cote prédéfinie de façon successive dans le sens d'écoulement avec réduction de la surface d'arrivée de courant.

3. Installation hydraulique selon la revendication 1 ou 2, **caractérisée en ce que** les pales de rotor (8) sont soutenues sur leur côté opposé à l'écoulement au moyen d'ergots de soutien (10) contre des ressorts à lame (11) écartés, lesquels sont répartis sur le pourtour de l'axe de rotor (7) et sont fixés sur l'axe de rotor (7).

4. Installation hydraulique selon l'une quelconque des revendications 1 à 3, **caractérisée en ce qu'**un palier de butée (12) est disposé sur l'axe de rotor (7), **en ce que** des leviers directeurs (13) sont articulés sur les pales de rotor (8), **en ce que** les leviers directeurs (13) sont articulés sur une bague de palier (14) pouvant coulisser sur l'axe de rotor (7) dans la direction longitudinale de l'axe et **en ce que** entre le palier de butée (12) et la bague de palier (14) est disposé un ressort de pression (15) entourant l'axe de rotor (7), lequel sollicite les pales de rotor (8) au moyen des leviers directeurs (13) et contre le sens d'écoulement du cours d'eau.

5. Installation hydraulique selon l'une quelconque des revendications 1 à 4, **caractérisée en ce que** l'axe de rotor (7) est conçu au moins sur l'extrémité d'axe avant et l'extrémité d'axe arrière comme axe de broche (7a, 7b), et **en ce que** le palier de butée (12) et/ou le palier (16) pour les pales de rotor (8) sont conçus sous forme d'écrous de broche déplaçables sur l'axe de broche (7a, 7b) et blocables.

6. Installation hydraulique selon l'une quelconque des revendications 1 à 5, **caractérisée en ce qu'**un ressort de pression (15') ou ressort de traction entourant l'axe de broche (7) est disposé entre la bague de palier (14) et le palier (16) pour les pales de rotor (8) et la bague de palier (14) ainsi que le palier (16) pour les pales de rotor (8) sont conçus sous forme d'écrous de broche.

7. Installation hydraulique selon l'une quelconque des revendications 1 à 6, **caractérisée en ce qu'**une pluralité de rotors (2) comprenant chacun un mécanisme de déplacement (9) est disposée sur l'axe de rotor (7) à des intervalles prédéfinis.

8. Installation hydraulique selon la revendication 7, **caractérisée en ce que** les diamètres extérieurs des rotors (2) et de leurs pales de rotor (8) augmentent d'un degré prédéfini dans le sens d'écoulement du cours d'eau et dépassent des rotors (2) disposés respectivement en amont.

9. Installation hydraulique selon l'une quelconque des revendications 1 à 8, **caractérisée en ce que** l'axe de rotor (7) est conçu sous forme d'axe creux s'élargissant en forme de cône dans le sens d'écoulement du cours d'eau.

10. Installation hydraulique selon l'une quelconque des revendications 1 à 9, **caractérisée en ce que** l'axe creux (7) est conçu à base de parties basses (18) formant des chambres creuses (17) et dotées chacune d'un rotor (2) et d'un mécanisme de déplacement (9) et peut être prolongé avec d'autres parties d'axe (18), les parties d'axe (18) pouvant être raccordées les unes aux autres au moyen de liaisons à bride (19) étanches au gaz et/ou à l'air et à l'eau.

11. Installation hydraulique selon l'une quelconque des revendications 1 à 10, **caractérisée en ce que** l'axe de rotor (7) est soutenu au moyen de paliers de guidage (20) à des intervalles prédéfinis.

12. Installation hydraulique selon l'une quelconque des revendications 1 à 11, **caractérisée en ce que** l'extrémité arrière dans le sens d'écoulement de l'axe de rotor (7) présente un système de guidage (21).

13. Installation hydraulique selon l'une quelconque des revendications 1 à 12, **caractérisée en ce que** le générateur (3) est disposé dans un boîtier (22), par exemple un boîtier formé de demi-coques avec des nervures de refroidissement (23) côté extérieur.

14. Installation hydraulique selon l'une quelconque des revendications 1 à 13, **caractérisée en ce que** plusieurs générateurs (3) sont disposés et couplés en ligne les uns vers les autres et raccordés à l'axe de rotor (7).

15. Installation hydraulique selon la revendication 13 ou 14, **caractérisée en ce qu'**un cône d'écoulement (24) creux est rattaché par bride au boîtier (22) côté arrivée de courant.
